# EUROPEAN PATENT APPLICATION

(11) **EP 4 663 692 A1**
(43) Date of publication of application: **17.12.2025**
(21) Application number: 24182391.3
(22) Date of filing: 14.06.2024
(51) Int. Cl.: C08J 11/16, C08J 11/28

(54) **PROCESS OF DEGRADING CROSS-LINKED DCPD-BASED POLYMERS**

(71) Applicant: RIMTEC Corporation, Tokyo 100-0005 (JP); Telene SAS, 59910 Bondues (FR)
(72) Inventor: DROZDZAK-MATUSIAK, Renata Anna, 59290 Wasquehal (FR); DAEMEN, Alexander Pieter Maria, 3090 Overijse (BE); NISHIOKA, Naoki, 59700 Marcq en Baroeul (FR); GULYÁS, Henrik, 43007 Tarragona (ES); TSCHAN, Mathieu Jean-Luc Joseph, 43007 Tarragona (ES)
(74) Representative: Arnold & Siedsma

(57) **Abstract**

The present invention concerns a process for degrading a cross-linked polymer having internal carbon-carbon double bonds in the polymer backbone, said process comprising the steps of (a) providing a polymer product comprising a cross-linked polymer of dicyclopentadiene (DCPD) monomers and optionally one or more further co-monomers, wherein said polymer product has a Young's modulus E of at least 1 GPa at a temperature of 0 °C, (b) providing one or more cross-metathesis partners, (c) providing one or more metathesis catalysts, and (d) contacting the polymer product, the one or more metathesis catalysts and the one or more cross-metathesis partners to degrade at least the cross-linked polymer in the polymer product by cross-metathesis with the one or more cross-metathesis partners. The invention further concerns a degraded polymer product, obtainable by said process.

## Description

### FIELD OF THE INVENTION

The present invention relates to a process for degrading a cross-linked polymer having internal carbon-carbon double bonds in the polymer backbone. The present invention further relates to a degraded polymer product, obtainable by said process.

### BACKGROUND OF THE INVENTION

Until now, the lifecycle of plastic products typically corresponds to a linear economy wherein plastics produced from fossil fuels end up as plastic waste that is either landfilled or incinerated or even ends up in the environment. Since the amount of plastic waste that is generated globally is steadily increasing over the years, improvements in plastic waste management are necessary. Accordingly, nowadays a lot of effort is put in turning the lifecycle of plastic products into a circular economy, wherein plastic waste from fossil fuels undergoes various processes to yield chemicals of added value.

At present, the majority of recycled plastic waste is recycled via mechanical methods. Mechanical recycling is, however, typically only applicable to thermoplastics. An alternative is chemical recycling of plastics by depolymerization to monomers and/or oligomers or by degradation into small fragments. Depolymerization to pristine monomers that can again be used in the manufacturing of new plastic products is typically only applicable to thermoplastic non-cross-linked polymers.

Thermosetting plastics, also called thermosets, are covalently cross-linked three-dimensional polymer networks that irreversibly adopt a given shape upon curing. These materials make up ~20% of manufactured polymers today, and they are often designed for high-temperature, chemically harsh, and/or mechanically extreme environments, e.g., in aerospace industry, in automotive design and in renewable energy and marine applications. The high density of cross-links that gives thermosets their useful properties, such as chemical and thermal resistance and high Young's modulus, comes at the expense of degradability and recyclability.

The degradation of unsaturated polymers via metathesis has been investigated for many years. D. Sathe et al., Chemical Reviews, web publication date May 24, 2024, https://doi.org/10.1021/acs.chemrev.3c00748, provide a detailed review article on deconstruction of polymers through olefin metathesis. Section 5 of this article concerns mechanisms of olefin-metathesis-based destruction of polymers. A mechanism for fragmentation degradation involving random chain scissions along the unsaturated polymer backbone, leading to polymer fragments with reduced molecular weight is described. The metathesis reaction involved in so-called alkenolysis is an intermolecular cross-metathesis reaction between the backbone unsaturated bonds and other alkene species, called chain transfer agents. Reference is made to alkenolysis of amongst others vulcanizates or cross-linked rubbers. Alkenolysis of cross-linked thermosets having a high Young's modulus is neither disclosed nor suggested.

O. Davydovich et al., Chem. Mater., 2022, 34(19), pp 8790-8797, https://doi.org/10.1021/acs.chemmater.2c02045, disclose that like most thermosets, PDCPD cannot be reprocessed and is therefore difficult to recycle. The solution proposed by them is to introduce specific cleavable bifunctional silyl ether bonds at the time of manufacturing of the thermoset. A similar approach has been used by Y.S. AlFaraj et al., ACS Cent. Sci., 2023, 9, pp 1810-1819, https://doi.org/10.1021/acscentsci.3c00502 and by P. Shieh et al., Nature, 2020, 583, pp 542-547, https://doi:10.1038/s41586-020-2495-2.

On May 1, 2024, N. Sottos, Department of Materials Science and Engineering at University of Illinois Urbana Champaign, gave an online presentation during a webinar hosted by the Bristol Composites Institute on `Regenerative Energy-Efficient Manufacturing of Thermoset Polymers and Composites'. The slides shown during this presentation and the video available through https://www.youtube.com/watch?v=U1fdiTN2bv8&list=PLhlRlukcTozKSgZQKr_zy315Bu1wzxwQ&index=1 clearly show that PDCPD is a permanent network and is not deconstructable/recyclable.

WO2021/242636A1 discloses processes for producing cyclic olefins from polyalkenamers using ring-closing metathesis (RCM) and re-polymerization thereof. Example 7 discloses the depolymerization of a cyclopentene-DCPD copolymer (1.9 mol% DCPD) using a ruthenium catalyst, resulting in amongst others cyclopentene. Due to the very low DCPD-content, the (micro)structure of the cyclopentene-DCPD copolymer probably does not contain a sequence of PDCPD.

WO2014/031677A1 discloses metathesis depolymerization of polyene molecules, such as polybutadiene, wherein the polyene-comprising molecule is combined with an olefin metathesis catalyst and an acrylic monomer, followed by removing all volatile alkenes that are formed to yield an acrylic diene-comprising monomer, oligomer or polymer. It is described in WO2014/031677A1 that polydicyclopentadiene (PDCPD) can be used. Polydicyclopentadiene is a polymer that can be linear or highly cross-linked, dependent on the catalyst used and on the reaction conditions. WO2014/031677A1 only discloses metathesis depolymerization of linear polyene '*molecules*'*.* No metathesis depolymerization of cross-linked thermosets is disclosed.

US5,446,102 discloses a process for decreasing the molecular weight of a polymer having internal carbon-carbon double bonds in the polymer backbone. The process comprises a step of contacting the polymer with a specific molybdenum- or tungsten-based metathesis catalyst in the presence of an olefin of lower molecular weight. US5,446,102 discloses depolymerization of cross-linked polybutadiene or cross-linked styrene-butadiene rubber in the presence of a molybdenum-based metathesis catalyst with 2-butene. No metathesis depolymerization of cross-linked thermosets is disclosed, let alone of DCPD-based cross-linked thermosets.

It is an object of the invention to provide methods for degrading cross-linked DCPD-based polymers into fragments of low molecular weight, such as building blocks for the production of new products, in an efficient way.

### SUMMARY OF THE INVENTION

The inventors have unexpectedly found that cross-linked DCPD-based polymers having internal carbon-carbon double bonds in the polymer backbone can be efficiently degraded into fragments of low molecular weight by cross-metathesis with a cross-metathesis partner. These cross-linked DCPD-based polymers having internal carbon-carbon double bonds in the polymer backbone and the polymer products containing them can be characterized by a Young's modulus *E* of at least 1 GPa at a temperature of 0 °C.

Accordingly, in a first aspect, the invention provides a process for degrading a cross-linked polymer having internal carbon-carbon double bonds in the polymer backbone, said process comprising the steps of:
(a) providing a polymer product comprising said cross-linked polymer having internal carbon-carbon double bonds in the polymer backbone, wherein said cross-linked polymer is a polymer of dicyclopentadiene (DCPD) monomers and optionally one or more further co-monomers, wherein said polymer product has a Young's modulus *E* of at least 1 GPa at a temperature of 0 °C, as measured in accordance with NEN-EN-ISO 527-1:2019;
(b) providing one or more cross-metathesis partners;
(c) providing one or more metathesis catalysts; and
(d) contacting the polymer product, the one or more metathesis catalysts and the one or more cross-metathesis partners to degrade at least the cross-linked polymer in the polymer product into degraded polymer fragments by cross-metathesis with the one or more cross-metathesis partners.

In a second aspect, the invention provides a degraded polymer product comprising degraded polymer fragments, obtainable by the process according to the first aspect.

### DEFINITIONS

In the context of the present invention, '*depolymerization*' concerns the process of converting a polymer into monomers and oligomers or into a mixture of different monomers and oligomers. The processes of degrading a cross-linked polymer via cross-metathesis, as defined herein, does not concern '*depolymerization*' into well-defined monomers and oligomers but rather results in '*degradation*' or '*deconstruction*' of the cross-linked polymer, resulting in polymer fragments of decreased molecular weight with typically nonuniform dispersity. It is envisaged that such polymer fragments of decreased molecular weight can be used as building blocks for the production of new products. Where '*degradation*' is used throughout this description, '*deconstruction*' can be used instead.

The term '*cross-metathesis partner(s)*' as used herein refers to the component(s) that are used to perform the cross-metathesis reaction with the carbon-carbon double bonds in the cross-linked polymer. Such component(s) is/are also referred to as '*cross-metathesis chain transfer agent(s)*' in the art. See in this regard D. Sathe et al., Chemical Reviews, web publication date May 24, 2024, https://doi.org/10.1021 /acs.chemrev.3c00748. Both terms are considered synonymous and interchangeable.

The term '*degraded polymer fragments*' as used herein refers to polymer fragments of decreased molecular weight that result from the cross-metathesis degradation reaction.

### BRIEF DESCRIPTION OF THE FIGURES

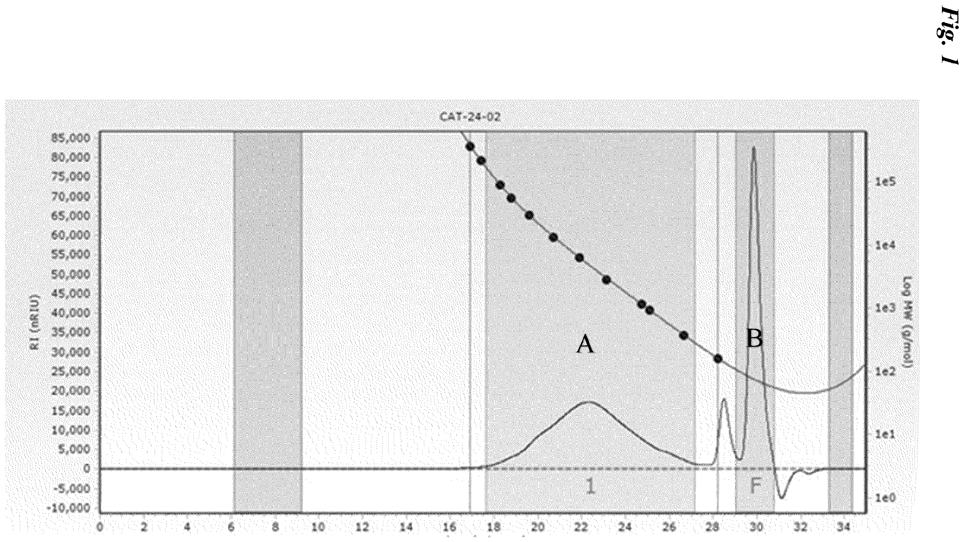

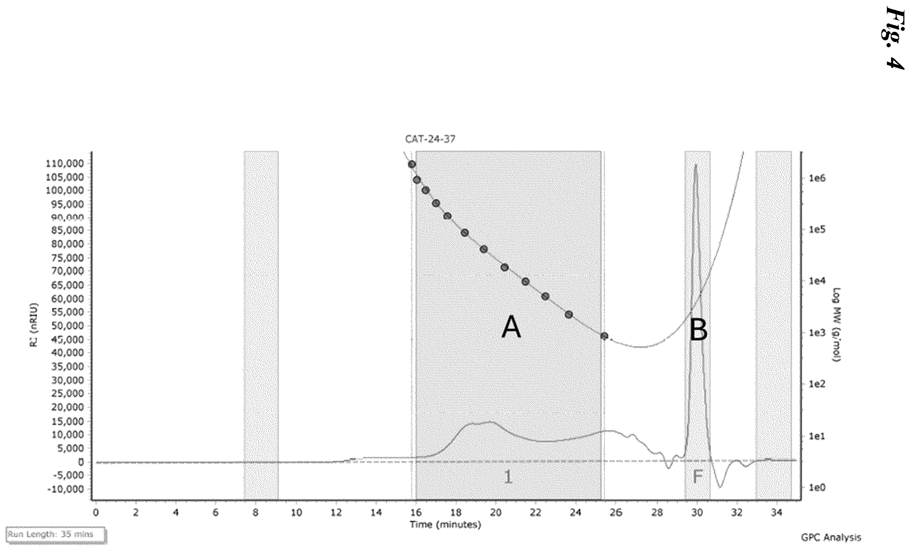

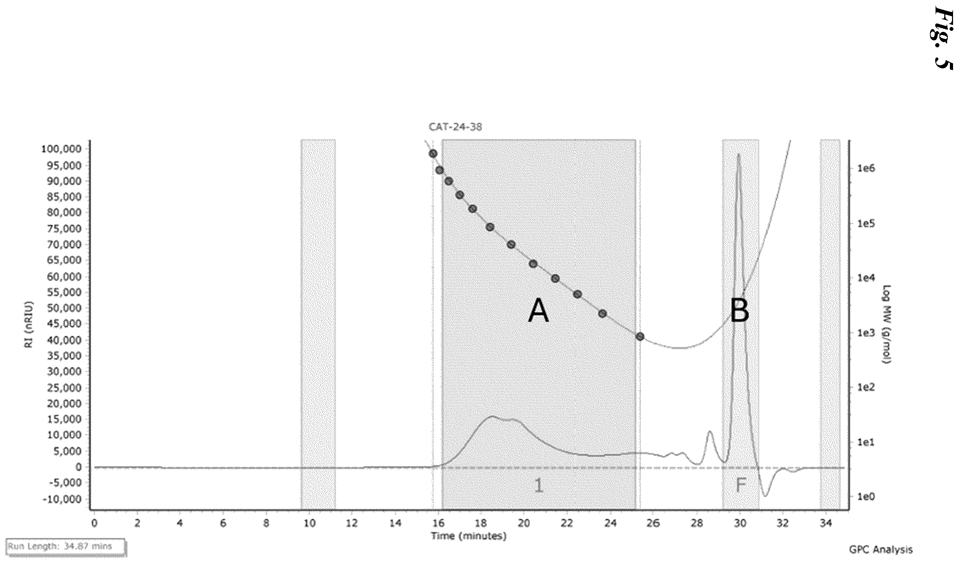

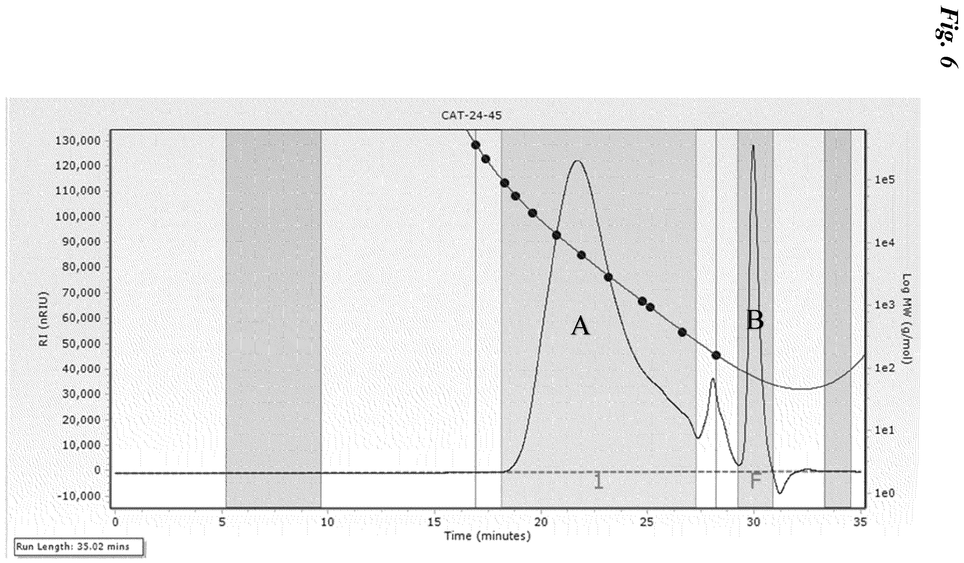

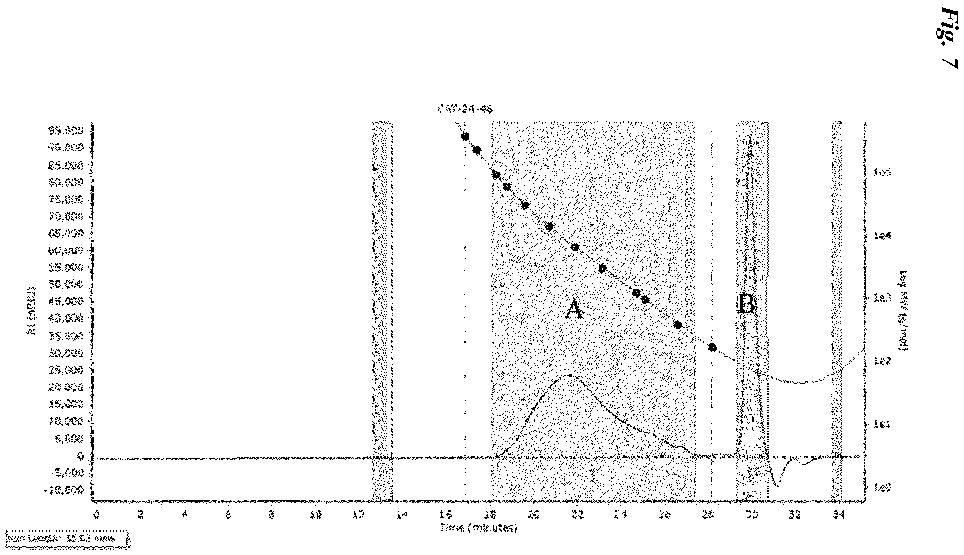

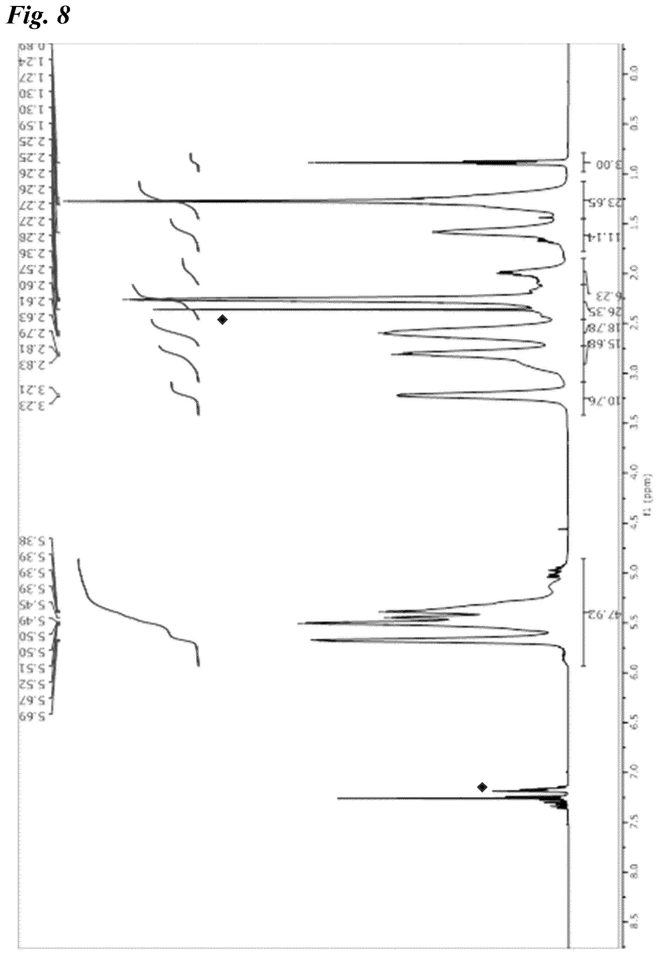

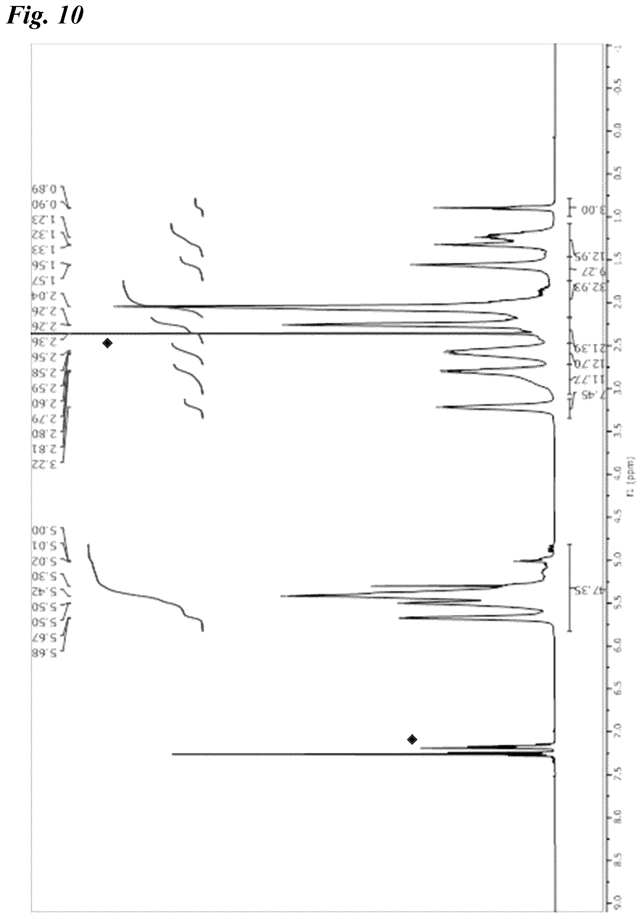

Figures 1 to 7 depict size-exclusion chromatograms corresponding to the degraded polymer products produced in Examples 2b, 2c, C3c, C3e, C3f, 4b and 4c, respectively. ¹H NMRs spectra of reaction products from Examples 2b, C3e and 4b are presented in Figures 8, 9 and 10, respectively.

### DETAILED DESCRIPTION

### Process for degrading a cross-linked polymer

In a first aspect, the invention concerns a process for degrading a cross-linked polymer having internal carbon-carbon double bonds in the polymer backbone, said process comprising the steps of:
(a) providing a polymer product comprising said cross-linked polymer having internal carbon-carbon double bonds in the polymer backbone, wherein said cross-linked polymer is a polymer of dicyclopentadiene (DCPD) monomers and optionally one or more further co-monomers, wherein said polymer product has a Young's modulus *E* of at least 1 GPa at a temperature of 0 °C, as measured in accordance with NEN-EN-ISO 527-1:2019;
(b) providing one or more cross-metathesis partners;
(c) providing one or more metathesis catalysts; and
(d) contacting the polymer product, the one or more metathesis catalysts and the one or more cross-metathesis partners to degrade at least the cross-linked polymer in the polymer product into degraded polymer fragments by cross-metathesis with the one or more cross-metathesis partners.

### Polymer product

In step (a) of the process according to the first aspect, a polymer product is provided comprising a cross-linked polymer having internal carbon-carbon double bonds in the polymer backbone, wherein said cross-linked polymer is a polymer of dicyclopentadiene (DCPD) monomers and optionally one or more further co-monomers, wherein said polymer product has a Young's modulus *E* of at least 1 GPa at a temperature of 0 °C, as measured in accordance with NEN-EN-ISO 527-1:2019.

The polymer product can, in addition to this specific cross-linked polymer, comprise one or more further ingredients, such as one or more further ingredients chosen from the group consisting of other polymers, dyes, pigments, fillers, reinforcement fibers, UV-absorbers, antioxidants and flame retardants.

In an embodiment, the polymer product comprises at least 70 wt% of the cross-linked polymer, based on the weight of the polymer product, preferably at least 80 wt%, more preferably at least 90 wt%, even more preferably at least 95 wt%, yet more preferably at least 98 wt%. In another embodiment, the polymer product consists of 65 - 99 wt% of the cross-linked polymer and 1-35 wt% of one or more further ingredients, based on the weight of the polymer product, preferably 75 - 98 wt% of the cross-linked polymer and 2 - 25 wt% of one or more further ingredients, more preferably 85 - 97 wt% of the cross-linked polymer and 3-15 wt% of one or more further ingredients.

The cross-linked polymer can be considered a thermoset. The polymer product provided in step (a) preferably has a Young's modulus *E* of at least 1.2 GPa at a temperature of 0 °C, as measured in accordance with NEN-EN-ISO 527-1:2019, more preferably at least 1.5 GPa, even more preferably at least 2 GPa. In another embodiment, the polymer product has a Young's modulus *E* between 1 and 2.4 GPa at a temperature of 0 °C, as measured in accordance with NEN-EN-ISO 527-1:2019, preferably between 1.8 and 2.1 GPa.

In an embodiment, the polymer product provided in step (a) has a tensile stress at yield of at least 10 MPa at a temperature of -5 °C, as measured with NEN-EN-ISO 527-1:2019, preferably at least 20 MPa at a temperature of 5 °C. In another embodiment, the polymer product provided in step (a) has a tensile stress at yield of between 20 and 70 MPa at a temperature of -20 °C, as measured with NEN-EN-ISO 527-1:2019, preferably between 20 and 50 MPA at a temperature of 0 °C.

In an embodiment, the polymer product provided in step (a) has a glass transition temperature *T*_{g} greater than 0 °C, as measured with DSC, preferably greater than 10 °C. In another embodiment, the polymer product provided in step (a) has a glass transition temperature *T*_{g} between 0 and 200 °C, as measured with DSC, preferably between 10 and 180 °C, more preferably between 17 and 170 °C.

The cross-linked polymer is a polymer of dicyclopentadiene (DCPD) monomers and optionally one or more further co-monomers. Accordingly, it can be a homopolymer or copolymer.

In a preferred embodiment, the cross-linked polymer is a polymer of between 30 and 100% of DCPD monomers and between 0 and 70% of further co-monomers, based on the total molar amount of monomers, wherein the amounts of DCPD monomers and further co-monomers add up to 100%, more preferably a polymer of between 50 and 100% of DCPD monomers and between 0 and 50% of further co-monomers, even more preferably a polymer of between 65 and 100% of DCPD monomers and between 0 and 35% of further co-monomers.

In a preferred embodiment, the cross-linked polymer is a polydicyclopentadiene (PDCPD) homopolymer.

In an embodiment, the one or more further co-monomers are chosen from the group consisting of cyclic olefins other than DCPD, linear olefins, branched olefins, vinyl aromatic compounds, (meth)acrylates, (meth)acrylic esters, allyl compounds, vinyl ether compounds and vinyl ester compounds.

In a preferred embodiment, the one or more further co-monomers are chosen from the group consisting of cyclic olefins other than DCPD, (meth)acrylates and (meth)acrylic esters.

In a very preferred embodiment, the one or more further co-monomers are chosen from the group consisting of ethylidene norbornene, cyclobutene, cyclopentene, 1,5-cyclooctadiene, cyclooctene, cyclohexene, cyclopentadiene, tricyclopentadiene, 1,5,9-cyclododecatriene, tricyclopentadienes, (meth)acrylates, di(meth)acrylate esters and tri(meth)acrylate esters.

In an embodiment, the one or more further co-monomers comprise less than 10% cyclopentene, based on the total molar amount of monomers, such as less than 8%, less 5% or less than 3%.

Non-limiting examples of cyclic olefins other than DCPD are norbornene, norbornadiene, substituted norbornenes, cyclobutene, cyclopentene, cyclooctadienes, cyclooctene, cyclohexene, cyclopentadiene, tricyclopentadienes, 1,5,9-cyclododecatriene, 2,2,2-bicyclo-2-octene, tricyclo[6.2.1.0(2,7)]undeca-4-ene, tetrahydrofluorene, tetracyclododecenes, hexacycloheptadecenes and Diels-Alder adducts of tetracyclododecenes and cyclopentadiene.

Non-limiting examples of substituted norbornenes are alkyl-substituted norbornenes, alkenyl-substituted norbornenes, norbornenes having an aromatic ring, 5-methoxycarbonyl norbornene, 5-ethoxycarbonyl norbornene, 5-methyl-5-methoxycarbonyl norbornene, norbornenyl-2-methylpropionate, norbornene-5,6-dicarboxylic anhydride, 5-hydroxymethylnorbornene, 5,6-di(hydroxymethyl) norbornene, 5,5-di(hydroxymethyl) norbornene, 5,6-dicarboxy norbornene, 5-methoxycarbonyl-6-carboxy norbornene, 5-cyano norbornene, and *N*-hydroxy-5-norbomene-2,3-dicarboxylic acid imide

Non-limiting examples of alkyl-substituted norbornenes are 5-methyl norbornene, 5-ethyl norbornene, 5-cyclohexyl norbornene and 5-cyclopentyl norbornene.

Non-limiting examples of alkenyl-substituted norbornenes are 5-methylidene norbornene, 5-ethylidene norbornene, 5-vinyl norbornene, 5-cyclohexenyl norbornene and 5-cyclopentenyl norbornene.

A non-limiting example of norbornenes having an aromatic ring is 5-phenyl norbornene.

Non-limiting examples of tetracyclododecenes are tetracyclododecene, alkyl-substituted tetracyclododecenes, alkenyl-substituted tetracyclododecenes, tetracyclododecenes having an aromatic ring, 8-ethoxycarbonyl tetracyclododecene, 8-methyl-8-methoxycarbonyl tetracyclododecene, 8-carboxytetracyclododecene, tetracyclododecene-8,9-dicarboxylic acid, tetracyclododecene-8,9-dicarboxylic anhydride, 8-cyano tetracyclododecene, tetracyclododecene-8,9-dicarboxylic acid imide and 8-chlorotetracyclododecene.

Non-limiting examples of alkyl-substituted tetracyclododecenes are 8-methyltetracyclododecene and 8-cyclohexyltetracyclododecene.

Non-limiting examples of alkenyl-substituted tetracyclododecenes are 8-methylidene tetracyclododecene, 8-ethylidene tetracyclododecene, 8-vinyl tetracyclododecene and 8-cyclohexenyl tetracyclododecene.

A non-limiting example of tetracyclododecenes having an aromatic ring is 8-phenyltetracyclododecene.

Non-limiting examples of linear olefins are ethylene, propylene, 1-butene, 1-pentene, 1-hexene, 1-octene, 1-butene, 2-pentene, 1,4-hexadiene and butadienes.

A non-limiting example of branched olefins is isoprene.

Non-limiting examples of vinyl aromatic compounds are styrene, α-methyl styrene, *p-*methyl styrene, aminostyrene, hydroxystyrene and divinyl benzene.

Non-limiting examples of (meth)acrylates and (meth)acrylic esters are (meth)acrylic acid, acryloyl halide, ethyleneglycol di(meth)acrylate, propanediol di(meth)acrylate, butanediol di(meth)acrylate, diethyleneglycol di(meth)acrylate, triethyleneglycol di(meth)acrylate, tetraethyleneglycol di(meth)acrylate, polyethyleneglycol di(meth)acrylate, trimethylolpropane tri(meth)acrylate, trimethylolethane (tri)methacrylate and trimethylolpropane propyleneoxide-modified tri(meth)acrylate.

Non-limiting examples of allyl compounds are monoallyl esters, monoallyl ethers diallyl esters and diallyl ethers.

An example of vinyl ester compounds is vinyl benzoate.

In a very preferred embodiment, the cross-linked polymer is a polymer of between 30 and 100% of DCPD monomers and between 0 and 70% of further co-monomers chosen from trimethylolpropane tri(meth)acrylate, 1,5-cyclooctadiene, cyclooctene, ethylidene norbornene, vinyl norbornene and tricyclopentadiene, based on the total amount of monomers, wherein the amounts of DCPD monomers and further co-monomers add up to 100%.

### Cross-metathesis partners

In step (b), one or more cross-metathesis partners are provided. In a preferred embodiment, these one or more cross-metathesis partners are selected from ethylene, internal olefins and α-olefins, more preferably from internal olefins and α-olefins.

Cross-metathesis partners chosen from internal olefins and α-olefins preferably have a molecular weight between 42 and 600 g/mol, more preferably between 56 and 400 g/mol.

In an embodiment, the internal olefins are chosen from compounds according to formula (I): 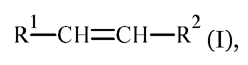 wherein R¹ and R² are independently selected from hydrocarbon moieties chosen from methyl, ethyl, C₃ to C₁₈ alkyl, C₆ to C₁₄ aryl, C₇ to C₁₄ alkylaryl or any of these hydrocarbon moieties substituted with one more hydroxy, halo, alkoxy, aryloxy, alkylaryloxy, cyano, alkylcarboxy, arylcaboxy, amino, alkyl amino, aryl amino, dialkyl amino, diaryl amino, alkylaryl amino, carboxyhydroxy, alkoxycarboxy, aryloxycarboxy, alkylcarboxyoxy, arylcarboxyoxy, wherein the substituent can be further substituted with one or more hydroxy or halo group, and wherein a halo can be fluoro, chloro, bromo or iodo. Any aryl group can be a homoaryl or heteroaryl, where one or more carbon atoms of one or more rings can be replaced by any combination of nitrogen, oxygen and sulfur atoms. One or more carbon atoms of any alkyl group can be replaced by any combination of nitrogen, oxygen and sulfur atoms.

Both the (Z)- and (E)-stereoisomer of the internal olefins according to formula (I) can be applied, either in pure form or as a mixture of both stereoisomers in any molar ratio from 1:0 to 0:1. The internal olefins can be symmetric R₁ = R₂ or non-symmetric R₁ ≠ R₂.

In a preferred embodiment, R¹ and R² are independently selected from methyl, ethyl and C₃ to C₁₈ alkyl.

In a very preferred embodiment, the internal olefins are chosen from 5-decenes, such as (E)-5-decene and (Z)-5-decene.

In an embodiment, the α-olefins are chosen from compounds according to formula (II): 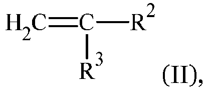 wherein R³ is either hydrogen or methyl, and wherein R² is as defined hereinbefore in the context of the internal olefins.

In a preferred embodiment, R³ is hydrogen and R² in the α-olefins is selected from methyl, ethyl and C₃ to C₁₈ alkyl.

In a very preferred embodiment, the α-olefin is 1-decene.

### Metathesis catalysts

In step (c), one or more metathesis catalysts are provided. Metathesis catalysts are well-known in the art. In this respect, reference is made to G. C. Vougioukalakis et al., Chem. Rev., 2010, 110(3), pp 1746-1787, https://doi.org/10.1021/cr9002424 and to R. R. Schrock et al., Angew. Chem. Int. Ed., 2003, 42(38), pp 4592-4633, https://doi.org/10.1002/anie.200300576, which are incorporated herein by reference in their entirety.

The one or more metathesis catalysts can be ill-defined, well-defined or a combination of ill-defined and well-defined catalysts. Ill-defined catalysts include catalytic systems in which metallocarbenes are formed *in situ* in a reaction between components of the catalytic system and often the substrate itself. Well-defined catalysts include stable (isolable and storable) metal carbene complexes that can be directly used as catalysts.

In a preferred embodiment, the one or more metathesis catalysts provided in step (c) are chosen from ruthenium-, molybdenum- and tungsten-based metathesis catalysts.

In an embodiment, the one or more metathesis catalyst provided in step (c) are 14-electron Schrock alkylidene compound according to Formula (III) or 18-electron Schrock alkylidene adducts according to Formula (IV): 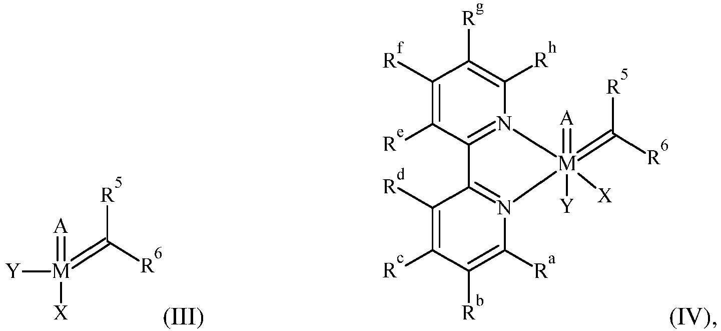 wherein:
M is Mo or W,
A is O or N-R⁷,
R⁵ and R⁶ are independently selected from the group consisting of H, C₁-C₁₂-alkyl and C₅-C₁₈-aryl, which C₁-C₁₂-alkyl and C₅-C₁₈-aryl in turn may be substituted with one or more of C₁-C₁₂-alkyl, C₅-C₁₈-aryl, C₁-C₁₂-alkyloxy, di-(C₁-C₄-alkyl)amino, halogen, trifluoromethyl, cyano and nitro residues, with the proviso that only one of R⁵ and R⁶ can be hydrogen at the same time,
R⁷ is selected from the group consisting of C₁-C₁₂-alkyl and C₅-C₁₈-aryl, which in turn may be substituted with one or more of C₁-C₁₂-alkyl, C₅-C₁₈-aryl, C₁-C₁₂-alkoxy, di-(C₁-C₄-alkyl)amino, halogen, trifluoromethyl, cyano and nitro residues,
X and Y are independently selected from the group consisting of halogen, methanesulfonyloxy, trifluoromethanesulfonyloxy, benzenesulfonyloxy, toluenesulfonyloxy, optionally substituted pyrrolyl, such as 2,5-dimethyl pyrrolyl, optionally substituted indolyl, pyrazolyl, C₁-C₁₂-alkyloxy, 5- to 18-membered aryloxy, tri(C₁-C₁₂-alkyl)silyloxy, tri(C₆-C₁₈-aryl)silyloxy, di(C₁-C₁₂-alkyl)(C₆-C₁₈-aryl)silyloxy, (C₁-C₁₂-alkyl)di(C₆-C₁₈-aryl)silyloxy and tri(C₁-C₁₂-alkyloxy)silyloxy, which in turn may be substituted with one or more of C₁-C₁₂-alkyl, 5-to 18-membered aryl, C₁-C₁₂-alkyloxy, di-(C₁-C₄-alkyl)amino, halogen, trifluoromethyl, cyano and nitro residues, and wherein R^{a}, R^{b}, R^{c}, R^{d}, R^{e}, R^{f}, R^{g} and R^{h} are independently selected from the group consisting of H, halogen, nitro, cyano, trifluoromethyl, C₁-C₁₂-alkoxycarbonyl, C₁-C₁₂-alkyl, C₅-C₁₈-aryl, C₁-C₁₂-alkyloxy and di-(C₁-C₄-alkyl)amino, or residues R^{d} and R^{e} are connected to one another while forming a 6-membered ring wherein R^{d} and R^{e} together form a group C(Rⁱ)=C(R^{j}) wherein Rⁱ and R^{j} are independently selected from the group consisting of H, halogen, nitro, cyano, trifluoromethyl, C₁-C₁₂-alkoxycarbonyl, C₁-C₁₂-alkyl, C₅-C₁₈-aryl, C₁-C₁₂-alkyloxy and di-(C₁-C₄-alkyl)amino.

In a preferred embodiment, the one or more metathesis catalyst provided in step (c) are chosen from the group consisting of formula (V-A), (V-B), (V-C), (V-D), (V-E) and (V-F): 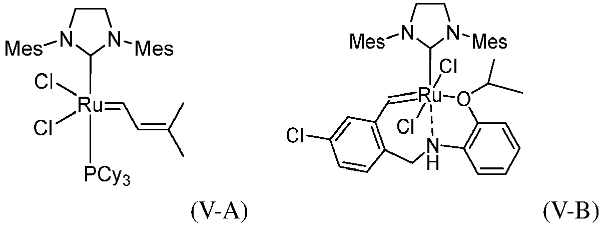 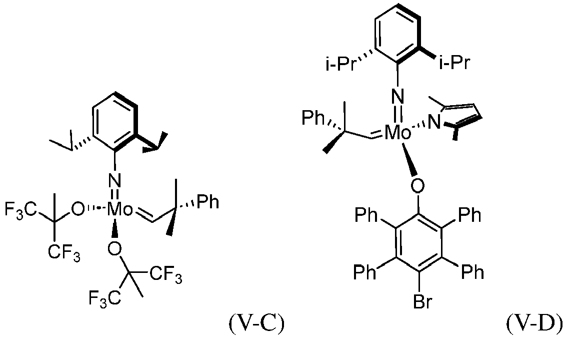 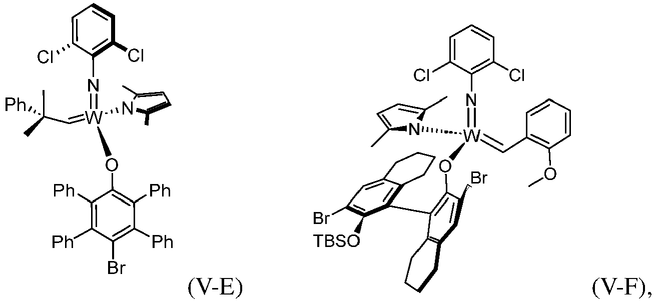 wherein

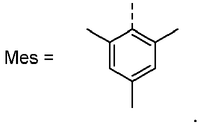

### Degradation reaction

In step (d), the polymer product, the one or more metathesis catalysts and the one or more cross-metathesis partners are contacted to degrade at least the cross-linked polymer in the polymer product into degraded polymer fragments with a reduced molecular weight by cross-metathesis with the one or more cross-metathesis partners. As will be appreciated by the skilled person, this does not exclude that other degradation mechanisms may simultaneously take place during step (d).

In an embodiment, the polymer product provided in step (a) comprises one or more further ingredients in addition to the cross-linked polymer having internal carbon-carbon double bonds in the polymer backbone. In step (d), at least the cross-linked polymer in the polymer product is degraded into degraded polymer fragments by cross-metathesis with the one or more cross-metathesis partners. It is, however, possible that the polymer product provided in step (a) also comprises one or more further ingredients that can be degraded by cross-metathesis with the one or more cross-metathesis partners.

In an embodiment, step (d) is performed in a liquid, preferably in a liquid having a Hildebrand solubility parameter δ between 13 and 22 MPa^{1/2}, more preferably in a liquid having a Hildebrand solubility parameter δ between 15 and 21 MPa^{1/2}, even more preferably in a liquid having a Hildebrand solubility parameter δ between 17 and 20.5 MPa^{1/2}. In a very preferred embodiment, the liquid is toluene, chlorobenzene, dichlorobenzene or xylene(s), most preferably toluene.

In a preferred embodiment, the liquid swells the polymer product provided in step (a), is a good solvent for the degraded polymer fragments obtained in step (d), or a combination thereof. In an embodiment, the one or more cross-metathesis partners provided in step (b) are liquid and no further liquid is added.

In an embodiment, step (d) is performed in a supercritical fluid, *i.e.*, in a fluid at supercritical conditions thereof. In another embodiment, step (d) is performed at a temperature between 15 and 200 °C, preferably at a temperature between 25 and 150 °C, more preferably at a temperature between 30 and 100 °C.

The contacting in step (d) is performed for a sufficiently long time to degrade at least the cross-linked polymer in the polymer product into degraded polymer fragments by cross-metathesis with the one or more cross-metathesis partners. Typically, step (d) is performed during between 2 and 80 h, such as between 10 and 50 h, or between 15 and 30 h.

In a preferred embodiment, the weight ratio of polymer product and metathesis catalyst applied in step (d) is between 1 : 2·10⁻⁶ and 1 : 0.1, more preferably between 1 : 4·10⁻⁴ and 1 : 0.065, even more preferably between 1 : 1·10⁻³ and 1 : 0.04.

In a preferred embodiment, the molar ratio of polymer product and metathesis catalyst applied in step (d) is between 1 : 1·10⁻⁶ and 1 : 0.1, more preferably between 1 : 1·10⁻⁵ and 1 : 0.001, even more preferably between 1 : 2 ·10⁻⁴ and 1 : 0.005, wherein the moles of the polymer product concern the moles of the monomers used to produce the polymer product.

In a preferred embodiment, the weight ratio of polymer product and cross-metathesis partner applied in step (d) is between 1 : 0.01 and 1 : 0.2, more preferably between 1 : 0.035 and 1 : 0.12.

In a preferred embodiment, step (d) results in degraded polymer fragments having a molecular weight distribution that is characterized by an average molecular weight *M*ₙ between 188 and 6000 g/mol, as determined by SEC (GPC) in THF using polystyrene and toluene as molecular weight and internal calibration standards respectively, more preferably an average molecular weight *M*ₙ between 500 and 4000 g/mol, even more preferably an average molecular weight *M*ₙ between 600 and 2500 g/mol.

In a preferred embodiment, step (d) results in degraded polymer fragments having a molecular weight distribution that is characterized by a dispersity *Ð* between 1 and 4, as determined by SEC (GPC) in THF using polystyrene and toluene as molecular weight and internal calibration standards respectively, more preferably a dispersity *Ð* between 1.2 and 3.5, even more preferably a dispersity *Ð* between 1.5 and 3.

The polymer product provided in step (a) comprises cross-linked polymer having internal carbon-carbon double bonds in the polymer backbone, wherein said cross-linked polymer is a polymer of dicyclopentadiene (DCPD) monomers and optionally one or more further co-monomers. Irrespective of any co-monomers being present, the cross-linked polymer will always comprise some repeating units of linear DCPD and cross-linked DPCD. Degraded polymer fragments of those units reacted with cross-metathesis partner will thus always be present in the degraded polymer product obtained in step (d). Without wishing to be bound by any theory, the inventors believe that the degradation reaction of the repeating units of linear DCPD and cross-linked DPCD in step (d) is as indicated in the Schemes 1 to 3 below wherein R¹ and R² are as defined hereinbefore, wherein each R is either R¹ or R², wherein R³ is either hydrogen or methyl, and wherein *n, m, o, p, q, r* and *s* are integers ≥ 1.

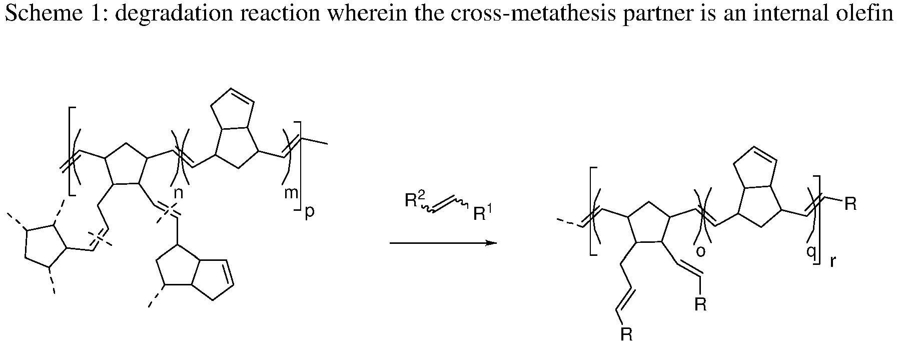

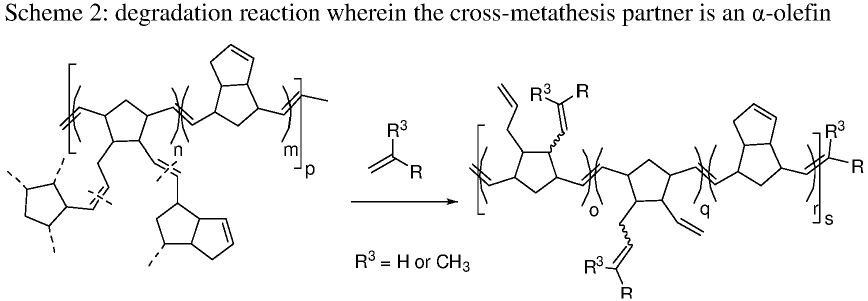

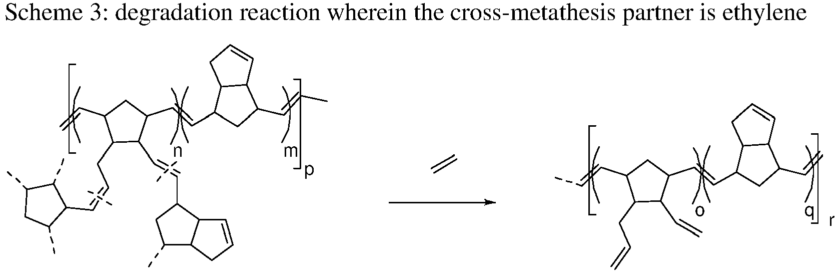

In a preferred embodiment, step (d) results in degraded polymer fragments comprising compounds having the structure of formula (VI), (VII), (VIII) or a combination thereof: 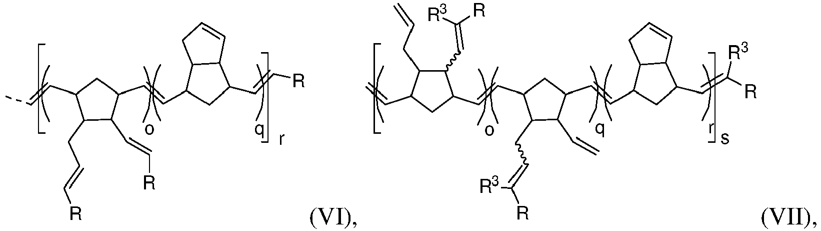 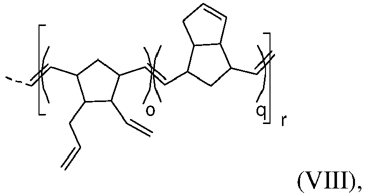 wherein R₁ and R₂ are as defined hereinbefore, wherein each R is either R¹ or R², wherein *n, m, o, p, q, r* and *s* are integers ≥ 1, wherein R³ is either hydrogen or methyl, and wherein said degraded polymer fragments have an average molecular weight *M*ₙ between 188 and 6000 g/mol, as determined by SEC (GPC) in THF using polystyrene and toluene as molecular weight and internal calibration standards respectively, more preferably an average molecular weight *M*ₙ between 500 and 4000 g/mol, even more preferably an average molecular weight *M*ₙ between 600 and 2500 g/mol.

### Degraded polymer product

In a second aspect, the invention concerns a degraded polymer product comprising degraded polymer fragments, obtainable by the process according to the first aspect.

In a preferred embodiment, the degraded polymer product comprises degraded polymer fragments having a molecular weight distribution that is characterized by an average molecular weight *M*ₙ between 188 and 6000 g/mol, as determined by SEC (GPC) in THF using polystyrene and toluene as molecular weight and internal calibration standards respectively, more preferably an average molecular weight *M*ₙ between 500 and 4000 g/mol, even more preferably an average molecular weight *M*ₙ between 600 and 2500 g/mol.

In a preferred embodiment, the degraded polymer product comprises degraded polymer fragments having a molecular weight distribution that is characterized by a dispersity *Ð* between 1 and 4, as determined by SEC (GPC) in THF using polystyrene and toluene as molecular weight and internal calibration standards respectively, more preferably a dispersity *Ð* between 1.2 and 3.5, even more preferably a dispersity *Ð* between 1.5 and 3.

In a preferred embodiment, the degraded polymer product comprises degraded polymer fragments comprising compounds having the structure of formula (VI), (VII), (VIII) or a combination thereof: 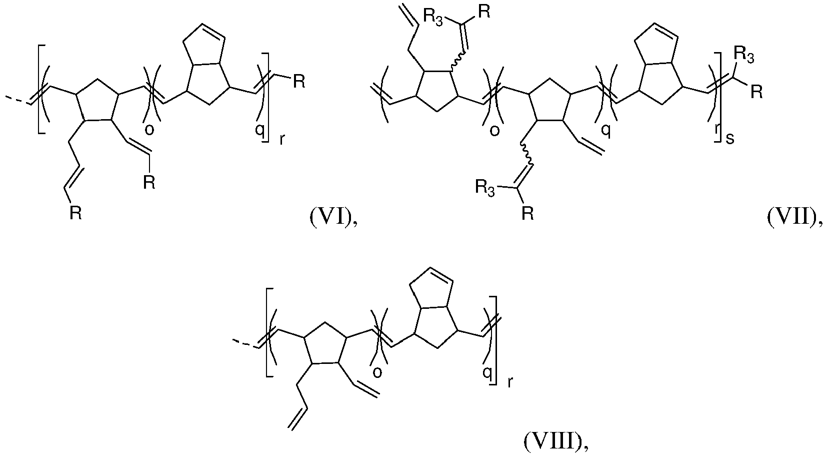 wherein R¹ and R² are as defined hereinbefore, wherein each R is either R¹ or R², wherein *n, m, o, p, q, r* and *s* are integers ≥ 1, wherein R³ is either hydrogen or methyl, and wherein said degraded polymer fragments have an average molecular weight *M*ₙ between 188 and 6000 g/mol, as determined by SEC (GPC) in THF using polystyrene and toluene as molecular weight and internal calibration standards respectively, more preferably an average molecular weight *M*ₙ between 500 and 4000 g/mol, even more preferably an average molecular weight *M*ₙ between 600 and 2500 g/mol.

Thus, the invention has been described by reference to certain embodiments discussed above. It will be recognized that these embodiments are susceptible to various modifications and alternative forms well known to those of skill in the art.
Furthermore, for a proper understanding of this document and its claims, it is to be understood that the verb '*to comprise*' and its conjugations are used in its non-limiting sense to mean that items following the word are included, but items not specifically mentioned are not excluded. In addition, reference to an element by the indefinite article '*a*' or '*an*' does not exclude the possibility that more than one of the elements is present, unless the context clearly requires that there be one and only one of the elements. The indefinite article '*a*' or '*an*' thus usually means '*at least one*'*.*

### EXPERIMENTAL SECTION

The present invention will now be described more specifically with reference to examples and comparative examples, without however being limited to these examples.

### Raw materials

### General remarks

All manipulations were carried out under an inert atmosphere (using Schlenk techniques or an argon glovebox) unless specified otherwise. 3Å molecular sieves were heated overnight at 200 °C under vacuum to get activated before use. Solvents (toluene, chlorobenzene and *n*-decane) were purchased as 99+ % or HPLC grade and dried over molecular sieves. Deuterated solvents (CDCl₃, C₆D₆) were bought from Eurisotop and dried over 3Å molecular sieves and stored inside a glovebox. Olefin reagents (chain transfer agent for the cross-metathesis reaction) were purified by percolation over activated basic alumina and distilled under vacuum before use and stored inside a glovebox.

### Monomers

In the experiments, the following monomers/monomer mixtures were used:
- COD: 100% *cis,cis*-1,5-cyclooctadiene;
- DCPD/TCPD: a mixture of dicyclopentadiene and tricyclopentadiene called RIM-M monomer in what follows, with a tricyclopentadiene content of between about 5 and 10 wt.%; and
- CPE: cyclopentene.

These monomers/monomer mixtures were provided by Telene SAS, France. RIM-M monomer was dried over 3Å molecular sieves for 48h. Then the monomer was filtered over a glass filter (porosity 4) and stored in a glove box. *cis,cis*-1,5-cyclooctadiene (COD) and cyclopentene (CPE) were used as received.

### Metathesis catalysts

The following metathesis catalysts were used in the examples. These catalysts were prepared in accordance with methods disclosed in the literature. Ru complex 2 was provided by Telene SAS. Complexes 1, 3, 4, 5, 7 and 8 were provided by XiMo Hungary Kft.
Ru: 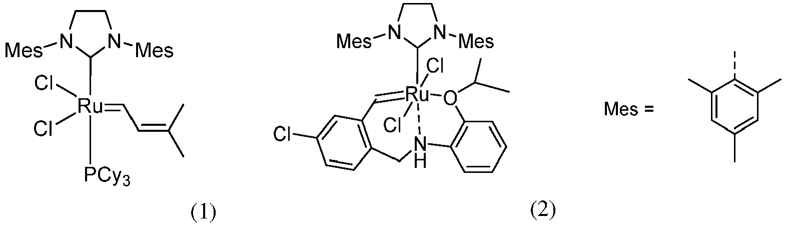
Mo: 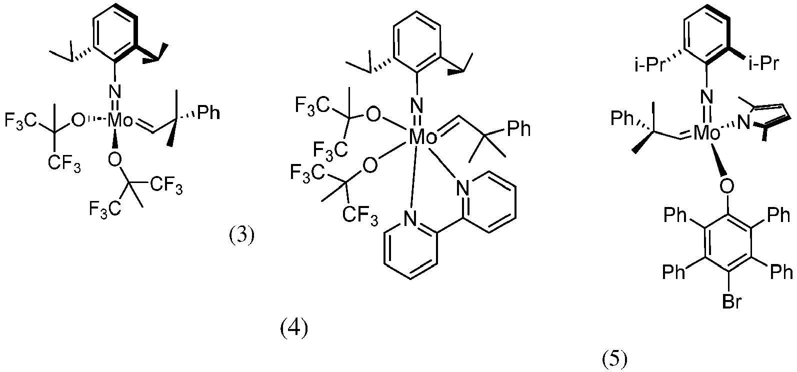
W:

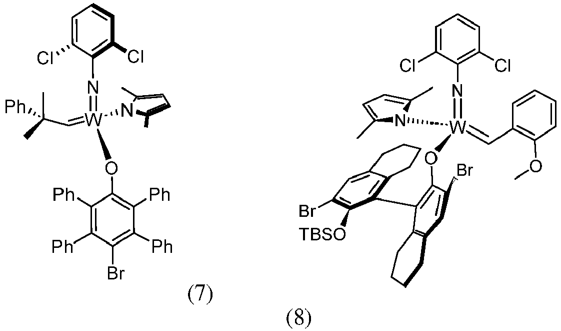

Catalyst stock solutions were prepared using chlorobenzene as solvent (dried over 3Å molecular sieves) at a concentration of 0.037 M. The catalyst stock solutions were stored in a glove box freezer at -30 °C. The catalyst stock solutions were used within the course of two weeks after preparation.

### Analytical techniques

### Nuclear magnetic resonance (NMR)

¹H NMR spectra were recorded in deuterated chloroform (CDCl₃) on a Bruker Avance Neo 400 MHz NMR spectrometer.

### Differential scanning calorimetry (DSC) analysis

DSC data were obtained at Telene SAS (France) by using a Q20 TA Instruments apparatus, calibrated with indium. Measurements were performed on a 10 mg polymer sample under nitrogen flow with a heating/cooling rate of 10 °C/min in the range of -30 to +250 °C. Two heating/cooling cycles were recorded. DSC data were processed with TA Universal Analysis v4.5A software. Glass transition temperature *T*_{g} was determined from the second heating cycle.

### Thermogravimetric analysis (TGA)

Data were obtained by using a TA instruments TGA55 calibrated with nickel. The analysis was carried out under nitrogen flow (60 mL·min⁻¹) in the range 25-400 °C at a 10 °C/min heating rate. Measurements were performed on 10 mg polymer samples. TGA data were processed with Trios software 5.3.0.48151.

### Size-exclusion chromatography (SEC)

Determination of the molecular weight distribution (*M*ₙ and dispersity *Ð*) of degraded polymer fragments was performed using SEC (GPC) in THF using polystyrene and toluene as molecular weight and internal calibration standards respectively. Sample preparation: THF solution (HPLC grade) approximately 10 mg in 2.0 mL, filtration (0.2 µm) and duplicate injection of the stock solution after 6 h.

Equipment: SEC chromatographic device consisting of an Agilent 1200 Isocratic Pump Injector with 100 µL loop, a three-serial column system: PLgel linear column, 3 µm Mixed-E (MW up to 30 K, 110266 plates /m; PLgel linear column 5 µm Mixed-D (MW 200-400 K, 55984 plates / m (1/2 ht)) and PLgel linear column, 20 µm Mixed-A (MW 1000-40M, 22153 plates/m (1/2 ht)) with an Agilent 1290 Infinity II series refractive index detector.

### Mechanical analysis

The Young's modulus and tensile stress at yield of the polymer products were determined using NEN-EN-ISO 527-1:2019.

### Example 1: Preparation of polymer products

### Example 1a: Preparation of cross-linked polydicyclopentadiene

In Example 1a, cross-linked polydicyclopentadiene was made as follows using a monomer/initiator molar ratio: 20000/1. To a 4 mL vial, a solution of catalyst 4 (10 µL of 0.037 M stock solution, 0.37 µmol of catalyst 4) was added using an Eppendorf micropipette (10-100 µL) with a plastic tip. Then, RIM-M monomer (1 mL, approx. 7.56 mmol, thus comprising DCPD with 5-10 wt% TCPD) was added in bulk over the catalyst solution using an Eppendorf micropipette (100-1000 µL) with a plastic tip. The resulting mixture was shaken to obtain a homogeneous initiator/monomer solution and the vial was closed with a screw cap with septum. The reaction was left to proceed without stirring. After 1-2 minutes, a transparent light orange hard material was obtained. The polymer product was recovered by breaking the glass vial and wiping the cylinder-shaped polymer piece to remove residual broken glass. The polymer product was stored in a glovebox. The glass transition temperature *T*_{g} and the Young's modulus *E* at 0°C of the polymer product were measured (see Table 1).

### Example 1b: Preparation of cross-linked poly(dicyclopentadiene-cyclooctadiene) copolymer

In Example 1b, cross-linked poly(dicyclopentadiene-cyclooctadiene) copolymer was made as follows using a monomer/initiator molar ratio: 20000/1 and a RIM-M:*cis,cis*-1,5-cyclooctadiene molar ratio of 1:1, which amounts to ~45 wt% *cis,cis*-1,5-cyclooctadiene. To a 4 mL vial, a solution of catalyst 2 (10 µL of 0.037 M stock solution, 0.37 µmol of catalyst 2) was added using an Eppendorf micropipette (10-100 µL) with a plastic tip. Then, a mixture of monomers (RIM-M; 3.7 mmol, 0.488 g, 0.494 mL and COD; 3.7 mmol, 0.399 g, 0.453 mL) was added in bulk over the catalyst solution using an Eppendorf micropipette (100-1000 µL) with a plastic tip. The mixture was shaken to obtain a homogeneous initiator/monomer solution and the vial was closed with a screw cap with septum. The reaction was left to proceed without stirring. After the heat release, a transparent light orange rubbery material was obtained. The polymer product was recovered by breaking the glass vial and wiping the cylinder-shaped polymer piece to remove residual broken glass. The polymer product was stored in a glovebox.

### Example 1c: Preparation of cross-linked poly(dicyclopentadiene-cyclooctadiene) copolymer

In Example 1c, cross-linked poly(dicyclopentadiene-cyclooctadiene) copolymer was made as follows using a monomer/initiator molar ratio: 20000/1 and RIM-M:*cis,cis*-1,5-cyclooctadiene molar ratio of 2:1, which amounts to ~29 wt% *cis,cis*-1,5-cyclooctadiene. To a 4 mL vial, a solution of catalyst 2 (10 µL of 0.037 M stock solution, 0.37 µmol of catalyst 2) was added using an Eppendorf micropipette (10-100 µL) with a plastic tip. Then, a mixture of monomers (RIM-M; 4.93 mmol, 0.652 g, 0.662 mL and COD; 2.47 mmol, 0.267 g, 0.303 mL) was added in bulk over the catalyst solution using an Eppendorf micropipette (100-1000 µL) with a plastic tip. The mixture was shaken to obtain a homogeneous initiator/monomer solution and the vial was closed with a screw cap with septum. The reaction was left to proceed without stirring. After the heat release, a transparent light orange hard material was obtained. The polymer product was recovered by breaking the glass vial and wiping the cylinder-shaped polymer piece to remove residual broken glass. The polymer product was stored in a glovebox. The glass transition temperature *T*_{g} and the Young's modulus E at 0°C of the polymer product were measured (see Table 1).

### Example 1d: Preparation of cross-linked poly(dicyclopentadiene-cyclopentene) copolymer

In Example 1d, cross-linked poly(dicyclopentadiene-cyclopentene) copolymer was made as follows using a monomer/initiator molar ratio: 20000/1 and RIM-M:cyclopentene molar ratio of 2:1, which amounts to ~25 wt% cyclopentene. In a 4 mL vial, a solution of catalyst 2 (10 µL of 0.037 M stock solution, 0.37 µmol of catalyst 2) was added using an Eppendorf micropipette (10-100 µL) with a plastic tip. Then, a mixture of monomers (RIM-M; 4.93 mmol, 0.652 g, 0.662 mL and CPE; 2.47 mmol, 0.168 g, 0.218 mL) was added in bulk over the catalyst solution using an Eppendorf micropipette (100-1000 µL) with a plastic tip. The mixture was shaken to obtain a homogeneous initiator/monomer solution and the vial was closed with a screw cap with septum. The reaction was left to proceed without stirring. After the heat release, a transparent light orange hard material was obtained. The polymer product was recovered by breaking the glass vial and wiping the cylinder-shaped polymer piece to remove residual pieces of broken glass. The polymer product was stored in a glovebox. The glass transition temperature *T*_{g} and the Young's modulus *E* . of the polymer product were measured (see Table 1).

**Table 1: Characteristics of the polymer products**

| Ex. | Cat. type | Cat. molppm | Cat. wtppm | Monomer(s) | Conv. % ^{(a)} | *T*_{g} °C ^{(b)} | *E* GPa ^{(c)} |
|---|---|---|---|---|---|---|---|
| 1a | 4 | 50 | 340 | RIM-M | 99 | 161 | 2 (at 20 °C) |
| 1c | 2 | 50 | 309 | RIM-M:COD 2:1 | 97 | 32 | 1 (at 5 °C) |
| 1d | 2 | 50 | 346 | RIM-M:CPE 2:1 | 94 | 75 | 1.5 (at 5 °C) |

| | | | | | | | |
|---|---|---|---|---|---|---|---|
| (a) conversion was determined by thermogravimetric analysis; (b) glass transition temperature *T*_{g} was determined by differential scanning calorimetry (taken from the second heating cycle), (c) the Young's modulus E at *T* > 0 °C, such as at 5 or 20 °C, corresponds to a higher Young's modulus E at *T* = 0 °C. | | | | | | | |

### Example 2: Degradation of cross-linked polydicyclopentadiene using cross-metathesis with a cross-metathesis partner

As a general example, a process of degradation of a cross-linked polydicyclopentadiene sample using cross-metathesis with a cross-metathesis partner is described here. A cross-linked polydicyclopentadiene sample (polymer product produced in Example 1a, 7.56 mmol of "DCPD/TCPD", ~1 g) was placed in a 24 mL scintillation vial. The desired amount of catalyst (0.5 mol% = 5000 molppm vs "DCPD/TCPD", 0.0379 mmol) was directly weighed and added onto the polymer piece as a solid. A catalyst stock solution of 0.037 M in chlorobenzene was used for the degradation reaction performed at either 1000, 600 or 200 ppm catalyst loading. Then a stirring bar was placed in the vial and toluene was added with a syringe (15 mL). Subsequently, the cross-metathesis partner (10 mol% vs "DCPD/TCPD", 0.758 mmol) was added. The vial was sealed with a screw cap equipped with a septum. The reaction mixture was heated at 95 °C for 24 h. After 24 hours, the reaction mixture was cooled down to room temperature and the reaction was quenched with excess of propionaldehyde or vinylethylether in the case of Mo and W or Ru based catalyst respectively. The extent of the degradation was determined from the weight of the residual polymer piece in the reaction mixture after drying under vacuum. Otherwise, when the obtained materials were fully soluble, the conversion was considered quantitative (> 99 %). Volatiles were evaporated and the obtained materials were characterized by NMR and SEC.

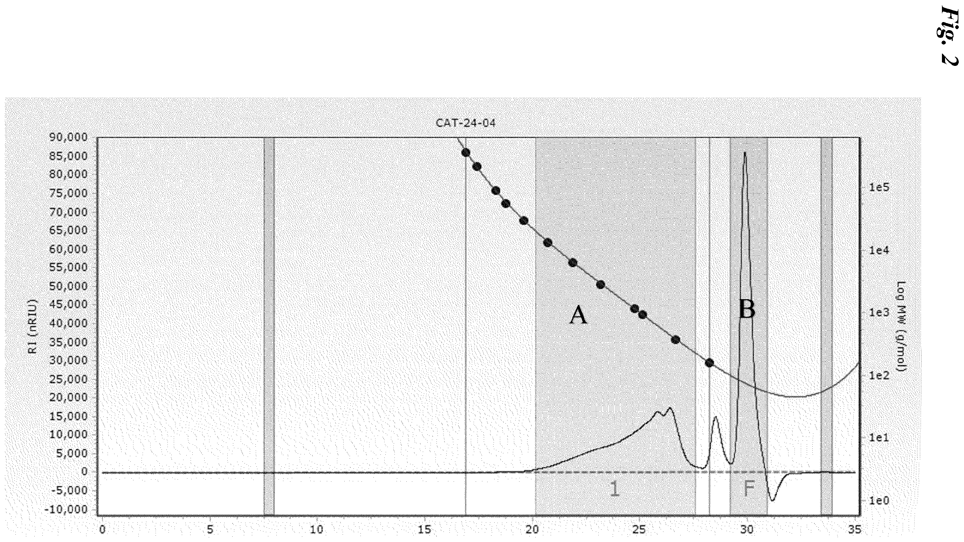

Using this general procedure, different degradation processes of polydicyclopentadiene (polymer product produced in Example 1a) were carried out with different metathesis catalysts and at different catalyst dosages and using different cross-metathesis partners chosen from the α-olefin 1-decene and the internal olefins (Z)-5-decene and (E)-5-decene. The average molecular weight *M*ₙ and dispersity *Ð* of the resulting fragments of decreased molecular weight were measured using size-exclusion chromatography in THF and reported relative to polystyrene standards for samples with a considerable degradation. Results are presented in Table 2. The size-exclusion chromatograms corresponding to Examples 2b and 2c are depicted in Figures 1 and 2, respectively, wherein 'A' indicates the integrated area and wherein 'B' indicates the toluene reference. The ¹H NMR spectrum of the reaction products from Example 2b is shown in Figure 8 as an example, wherein the black diamond-shaped symbol refers to residual toluene in the product.

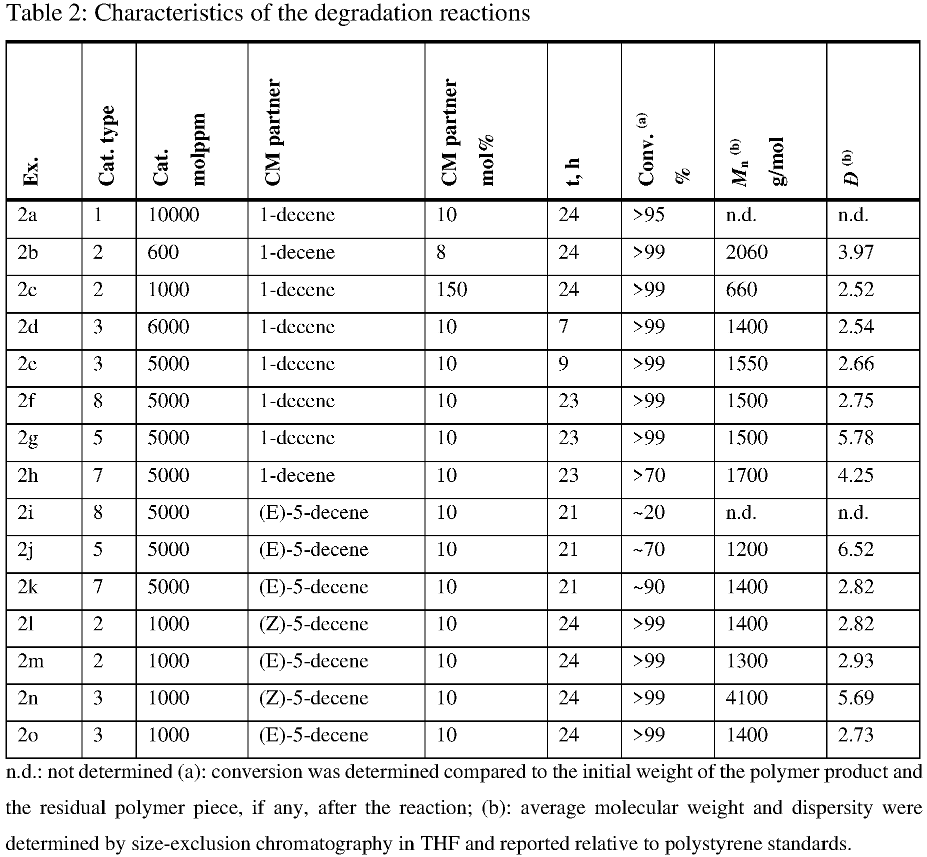

It can be concluded from Table 2 that ruthenium-based metathesis catalysts (1, 2) and Schrock alkylidene metathesis catalysts (3, 5, 7 and 8) efficiently depolymerize cross-linked polydicyclopentadiene via cross-metathesis using a cross-metathesis partner, such as 1-decene and 5-decene. In the case of the usage of cross-metathesis partner 1-decene and ruthenium metathesis catalysts in Examples 2a, 2b, and 2c, either the catalyst or the 1-decene were added in portions during the course of the reaction. In the case of examples 2a and 2c, the catalyst was added in three portions (0.4 + 0.4 + 0.2 of the total amount) at t = 0, 15, and 19 h. In the case of Example 2b, the 1-decene was added in three portions similarly to Examples 2a and 2c. The inventors hypothesize that the ruthenium metathesis complexes got deactivated by 1-decene via the "methylidene pathway" c.f.: Jawiczuk et al., Catalysts, 2020, 10(8), 887, https://doi:10.3390/catal10080887.

### Comparative Example 3: Degradation of cross-linked polydicyclopentadiene without cross-metathesis partner or without metathesis catalyst

Using the general procedure described in Example 2, different comparative degradation processes of cross-linked polydicyclopentadiene (polymer product produced in Example 1a) were carried out without metathesis catalysts or without cross-metathesis partner. The average molecular weight *M*ₙ and dispersity *Ð* of the resulting fragments of decreased molecular weight were measured using size-exclusion chromatography in THF and reported relative to polystyrene standards for samples with a considerable degradation. Results are presented in Table 3.

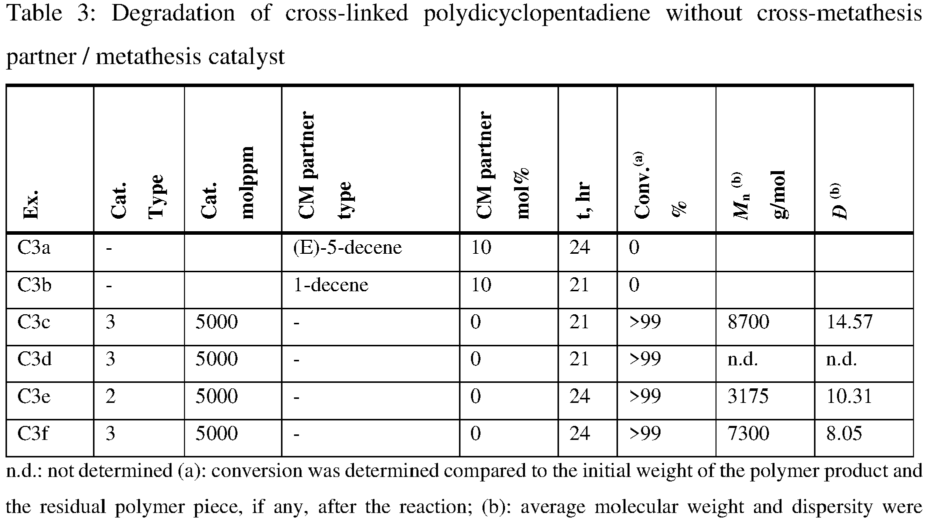

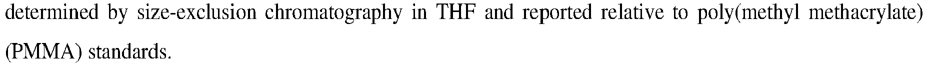

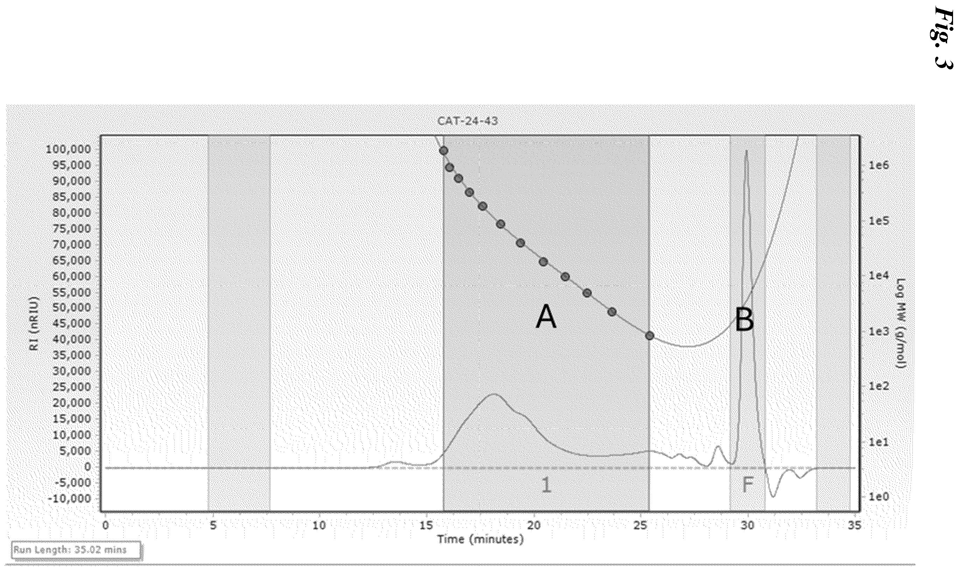

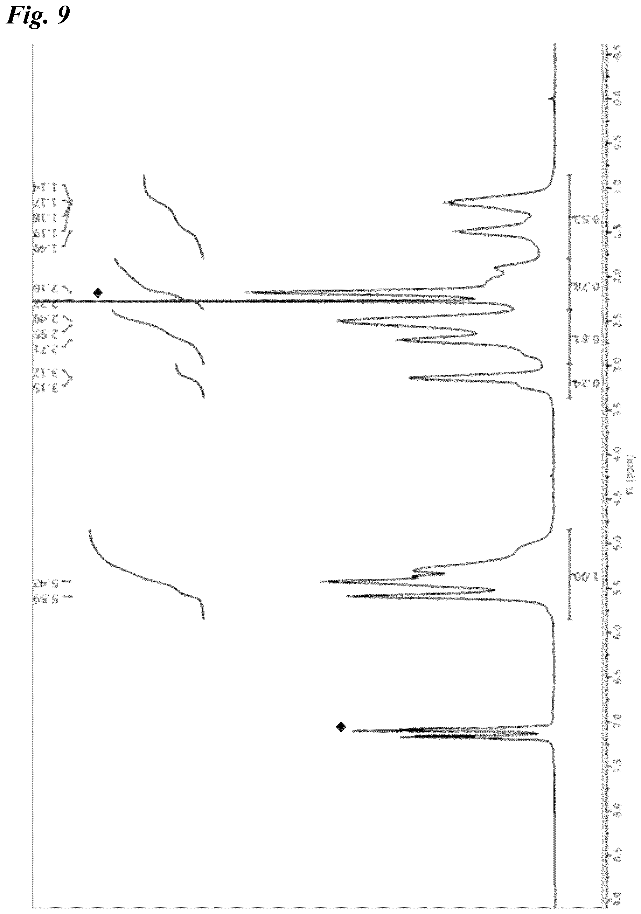

It follows from Table 3 that without metathesis catalyst (Comparative Examples C3a and C3b), no degradation was observed in the presence of cross-metathesis partner. Without cross-metathesis partner but in the presence of metathesis catalyst, cross-linked polydicyclopentadiene was degraded without control into soluble materials (in toluene) of relatively high molecular weight and with very high polydispersity. The average molecular weight in number *M*ₙ and dispersity *Ð* of the formed materials in Comparative Examples C3c, C3e and C3f could not be properly determined versus polystyrene standards because of the polymodal distribution and because of low intensity oligomers that could not always be taken into account in the average molecular weight. High and low molecular weight materials in those samples were mostly out of the SEC calibration range of the polystyrene standard. The average molecular weight in number *M*ₙ and dispersity Ð of the formed materials in Table 3 is therefore reported relative to poly(methyl methacrylate) (PMMA) standards. The dispersity *Ð* relative to polystyrene and PPMA standards are comparable. The range of molecular weight used for the calibration of the SEC for both standards was: polystyrene standards have molecular weights from 160 to 364.000 g.mol⁻¹ and polymethylmethacrylate standards have molecular weights from 800 to 2.200.000 g.mol⁻¹. The size-exclusion chromatograms corresponding to Examples C3c, C3e, and C3f are presented in Figures 3, 4 and 5 respectively, wherein 'A' indicates the integrated area and wherein 'B' indicates the toluene reference. The ¹H NMR spectrum of the reaction products from example C3e is shown in Figure 9 as an example, wherein the black diamond-shaped symbol refers to residual toluene in the product.

### Example 4 and Comparative Example 5: Degradation of cross-linked dicyclopentadiene copolymers using cross-metathesis with or without a cross-metathesis partner

Using the general procedure described in Example 2, different comparative degradation processes of DPCP copolymers (polymer product produced in Examples 1b to 1d) were carried out with a cross-metathesis partner.

Moreover, using the general procedure described in Example 2, different comparative degradation processes of DPCP copolymers (polymer product produced in Examples 1b to 1d) were carried out without cross-metathesis partner.

The average molecular weight *M*ₙ and dispersity *Ð* of the resulting fragments of decreased molecular weight were measured using size-exclusion chromatography in THF and reported relative to polystyrene standards for samples with a considerable degradation. Results are presented in Table 4. The size-exclusion chromatograms corresponding to Examples 4b and 4c are depicted in Figures 6 and 7, respectively, wherein 'A' indicates the integrated area and wherein 'B' indicates the toluene reference. The ¹H NMR spectrum of the reaction products from Example 4b is shown in Figure 10 as an example, wherein the black diamond-shaped symbol refers to residual toluene in the product.

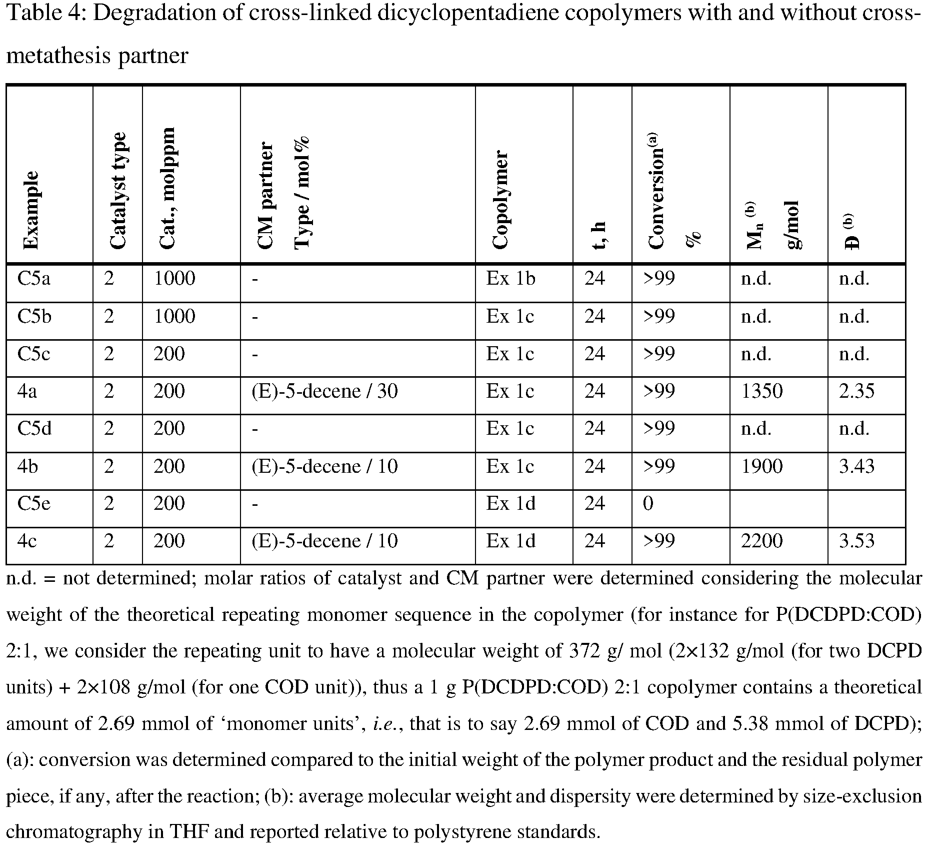

It can be concluded from the results presented in Table 4 (Comparative Examples C5a, C5b and C5c) that without cross-metathesis partner, DCPD/COD copolymers (1:1 and 2:1 molar ratios of DCPD:COD, polymer products produced in Examples 1b and 1c, respectively) can be degraded into partially soluble materials in toluene. The materials obtained are however completely insoluble in tetrahydrofuran (consequently, the SEC analysis could not be performed in these cases). The copolymer DCPD/CPE (2:1 molar ratio of DCPD/CPE) is, however, not degraded under the reaction conditions applied in the absence of cross-metathesis partner (Comparative Example C5e).

WO2021/24636A1 discloses in Example 7 depolymerization of a DCPD/CPE copolymer using ring-closing metathesis with a Hoveyda-Grubbs catalyst (2^{nd} generation). Hence, this depolymerization (not degradation) is also performed without the addition of cross-metathesis partner. The effective depolymerization of DCPD/CPE copolymer in WO2021/24636A1 is, however, possible because of the very low DCPD/CPE molar ratio of 1:54.6, which is far removed from the ratios applied in the present invention.

In the presence of a chain transfer agent, such as (E)-5-decene, both copolymers can be successfully depolymerized into low molecular weight materials (Examples 4a, 4b and 4c). Chain transfer agent (E)-5-decene is highly beneficial for the degradation reaction (in terms of kinetics and homogeneity of products formed). DCPD/CPE copolymers seem to be more difficult to degrade than DCPD/COD copolymers.

### Example 6: Degradation of cross-linked polydicyclopentadiene using cross-metathesis with a cross-metathesis partner

Using the general procedure described in Example 2, different degradation processes of cross-linked polydicyclopentadiene (polymer product produced in Example 1a) were carried out with different metathesis catalysts and cross-metathesis partner (E)-5-decene and using different temperatures and solvents. The average molecular weight *M*ₙ and dispersity *Ð* of the resulting fragments of decreased molecular weight were measured using size-exclusion chromatography in THF and reported relative to polystyrene standards for samples with a considerable degradation. Results are presented in Table 5.

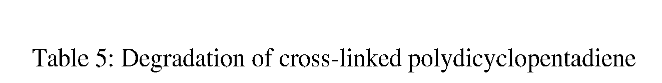

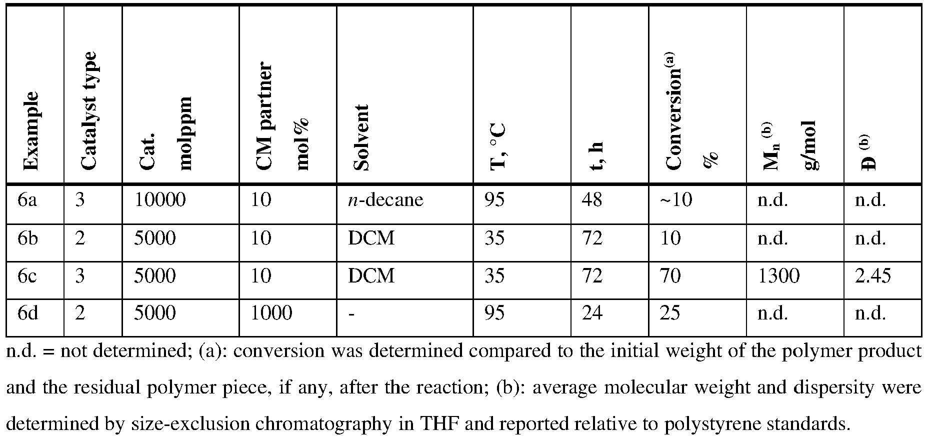

Degradation reactions in Examples 2 to 5 were performed in toluene. Toluene has a Hildebrand solubility parameter ∂ of 18.3 MPa^{1/2}. In Example 6, different liquids are tested (Examples 6a to 6c) or chain transfer agent (E)-5-decene served as a liquid (Example 6d). *n*-Decane (∂ = 15.5 MPa1^{/2}) and dichloromethane (DCM, (∂ = 20.2 MPa^{1/2}) were tested as they have respectively lower and higher Hildebrand solubility parameters than toluene.

When n-decane was used, the reaction rate highly decreased and higher catalyst loading was necessary to reach approximately 10 % conversion. The metathesis catalyst was added in two equal portions at t = 0 and t = 24 h.

Depolymerization of polydicyclopentadiene can also be carried out in a chlorinated solvent and also at lower temperature (see Example 6c). As expected, the reaction rate is much slower at 35 °C compared to 95 °C. Importantly, it was observed that the reaction can be performed directly in a liquid cross-metathesis partner (Example 6d). However, the degradation reaction was much slower and only low conversion was achieved in 24 h at 95 °C.

## Claims

1. Process for degrading a cross-linked polymer having internal carbon-carbon double bonds in the polymer backbone, said process comprising the steps of:
(a) providing a polymer product comprising said cross-linked polymer having internal carbon-carbon double bonds in the polymer backbone, wherein said cross-linked polymer is a polymer of dicyclopentadiene (DCPD) monomers and optionally one or more further co-monomers, wherein said polymer product has a Young's modulus *E* of at least 1 GPa at a temperature of 0 °C, as measured in accordance with NEN-EN-ISO 527-1:2019;
(b) providing one or more cross-metathesis partners;
(c) providing one or more metathesis catalysts; and
(d) contacting the polymer product, the one or more metathesis catalysts and the one or more cross-metathesis partners to degrade at least the cross-linked polymer in the polymer product into degraded polymer fragments by cross-metathesis with the one or more cross-metathesis partners.

2. Process according to claim 1, wherein the polymer product provided in step (a) has a Young's modulus E of at least 1.2 GPa at a temperature of 0 °C, as measured in accordance with NEN-EN-ISO 527-1:2019.

3. Process according to claim 1 or 2, wherein the polymer product provided in step (a) has a glass transition temperature *T*_{g} greater than 0 °C, as measured with DSC, preferably greater than 10 °C.

4. Process according to any one of claims 1 to 3, wherein the weight ratio of polymer product and metathesis catalyst applied in step (d) is between 1 : 2·10⁻⁶ and 1 : 0.1, preferably between 1 : 4·10⁻⁴ and 1 : 0.065, more preferably between 1 : 1·10⁻³ and 1 : 0.04.

5. Process according to any one of claims 1 to 4, wherein the weight ratio of polymer product and cross-metathesis partner applied in step (d) is between 1 : 0.01 and 1 : 0.2, preferably between 1 : 0.035 and 1 : 0.12.

6. Process according to any one of claims 1 to 5, wherein the one or more cross-metathesis partners are selected from ethylene, internal olefins and α-olefins.

7. Process according to any one of claims 1 to 6, wherein the internal olefins are chosen from compounds according to formula (I): 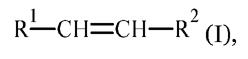 wherein R¹ and R² are independently selected from hydrocarbon moieties chosen from methyl, ethyl, C₃ to C₁₈ alkyl, C₆ to C₁₄ aryl, C₇ to C₁₄ alkylaryl or any of these hydrocarbon moieties substituted with one more hydroxy, halo, alkoxy, aryloxy, alkylaryloxy, cyano, alkylcarboxy, arylcaboxy, amino, alkyl amino, aryl amino, dialkyl amino, diaryl amino, alkylaryl amino, carboxyhydroxy, alkoxycarboxy, aryloxycarboxy, alkylcarboxyoxy, arylcarboxyoxy, wherein the substituent can be further substituted with one or more hydroxy or halo group, and wherein a halo can be fluoro, chloro, bromo or iodo.

8. Process according to any one of claims 1 to 6, wherein the α-olefins are chosen from compounds according to formula (II): 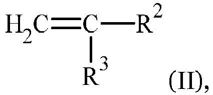 wherein R³ is either hydrogen or methyl, and wherein R² is selected from hydrocarbon moieties chosen from methyl, ethyl, C₃ to C₁₈ alkyl, C₆ to C₁₄ aryl, C₇ to C₁₄ alkylaryl or any of these hydrocarbon moieties substituted with one more hydroxy, halo, alkoxy, aryloxy, alkylaryloxy, cyano, alkylcarboxy, arylcaboxy, amino, alkyl amino, aryl amino, dialkyl amino, diaryl amino, alkylaryl amino, carboxyhydroxy, alkoxycarboxy, aryloxycarboxy, alkylcarboxyoxy, arylcarboxyoxy, wherein the substituent can be further substituted with one or more hydroxy or halo group, and wherein a halo can be fluoro, chloro, bromo or iodo.

9. Process according to any one of claims 1 to 8, wherein the one or more metathesis catalysts provided in step (c) are chosen from ruthenium-, molybdenum- and tungsten-based metathesis catalysts.

10. Process according to any one of claims 1 to 9, wherein the cross-linked polymer provided in step (a) is a polymer of between 30 and 100% of DCPD monomers and between 0 and 70% of further co-monomers, based on the total molar amount of monomers, wherein the amounts of DCPD monomers and further co-monomers add up to 100%.

11. Process according to any one of claims 1 to 10, wherein the polymer product comprises at least 70 wt% of the cross-linked polymer, based on the weight of the polymer product, preferably at least 80 wt%, more preferably at least 90 wt%, even more preferably at least 95 wt%.

12. Degraded polymer product comprising degraded polymer fragments, obtainable by the process according to any one of claims 1 to 11.

13. Degraded polymer product according to claim 12, wherein the degraded polymer fragments have a molecular weight distribution that is **characterized by** an average molecular weight *M*ₙ between 188 and 6000 g/mol, as determined by SEC (GPC) in THF using polystyrene and toluene as molecular weight and internal calibration standards respectively, preferably an average molecular weight *M*ₙ between 500 and 4000 g/mol, more preferably an average molecular weight *M*ₙ between 600 and 2500 g/mol.

14. Degraded polymer product according to claim 12 or 13, wherein the degraded polymer fragments have a molecular weight distribution that is **characterized by** a dispersity D between 1 and 4, as determined by SEC (GPC) in THF using polystyrene and toluene as molecular weight and internal calibration standards respectively, preferably a dispersity *Ð* between 1.2 and 3.5, more preferably a dispersity *Ð* between 1.5 and 3.

15. Degraded polymer product according to claim 12 or 14, wherein the degraded polymer fragments comprise compounds having the structure of formula (VI), (VII), (VIII) or a combination thereof: 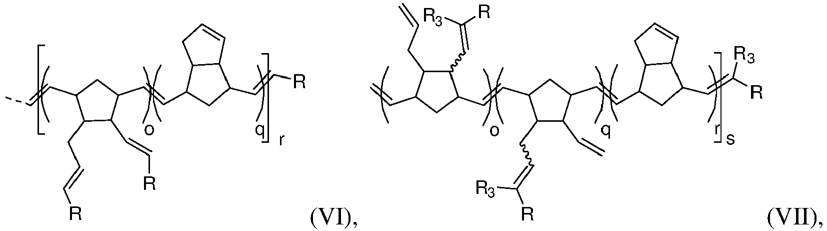 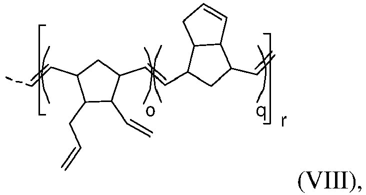 wherein each R is either R¹ or R² as defined in claim 8, wherein *n, m, o, p, q, r* and *s* are integers ≥ 1, wherein R³ is either hydrogen or methyl and wherein said degraded polymer fragments have an average molecular weight *M*ₙ between 188 and 6000 g/mol, as determined by SEC (GPC) in THF using polystyrene and toluene as molecular weight and internal calibration standards respectively, preferably an average molecular weight *M*ₙ between 500 and 4000 g/mol, more preferably an average molecular weight *M*ₙ between 600 and 2500 g/mol.
